# FASCICULE DE BREVET EUROPEEN

(11) **EP 0 635 443 B1**
(45) Date de publication et mention de la délivrance du brevet: **01.04.1998**
(21) Numéro de dépôt: 94202046.2
(22) Date de dépôt: 14.07.1994
(51) Int. Cl.: B65G 51/00, B65G 47/14, B65G 47/08

(54) **Dispositif d'alignement de produits tels que des fruits se déplaçant en nappe dans un canal animé d'un courant d'eau**
Vorrichtung zum Ausrichten von in einer Schicht bewegten Produkten wie Früchten, entlang einem Kanal mittels eines Wasserstroms
Aligning device for products like fruits moving in a layer trough a channel by means of a water current

(30) Priorité: 23.07.1993 FR 9309206
(43) Date de publication de la demande: 25.01.1995
(73) Titulaire: MATERIEL POUR L'ARBORICULTURE FRUITIERE (M.A.F.) S.A., F-82000 Montauban (FR)
(72) Inventeur: Blanc, Philippe, F-82000 Montauban (FR)
(74) Mandataire: Cabinet BARRE LAFORGUE & associés

(56) Documents cités:
- FR-A- 1 558 764
- GB-A- 2 124 571
- US-A- 2 811 393
- US-A- 3 945 901

## Description

L'invention concerne un dispositif d'alignement de produits tels que des fruits se déplaçant en nappe dans un canal animé d'un courant d'eau, en vue de l'alimentation d'un convoyeur à n lignes de transport parallèles.

Les opérations de préconditionnement des fruits fragiles, en particulier le calibrage des pommes, nécessitent un convoyage des produits dans des canaux d'eau qui assurent un transfert en douceur d une machine à la suivante.

Une des fonctions les plus délicates à gérer concerne l'alimentation des calibreuses dotées de n lignes de transport parallèles comportant chacune une pluralité de rouleaux espacés entre lesquels doivent être amenés les fruits, car cette alimentation requiert une mise en lignes des fruits à partir d'une nappe de fruits en accumulation compacte sur l eau.

Une telle mise en lignes nécessite, en effet, de déplacer avec un débit ordonné, un flux constant de fruits en quantité suffisante pour assurer un bon rendement de la calibreuse, sans toutefois amener plus d'un fruit à la fois entre deux rouleaux, ce qui provoquerait une erreur de mesure concernant les fruits se trouvant en doublon.

De plus, il est également nécessaire de gérer les effets de coincement provoqués par la compacité de la nappe, qui peuvent entraîner des ruptures de flux préjudiciables au rendement.

Enfin, il convient de souligner que cette alimentation doit être assurée avec un maximum de douceur en raison de la grande fragilité des fruits.

Les dispositifs actuels, tels que par exemple celui décrit dans le brevet GB-A-2124571 ne permettent pas d'alimenter les calibreuses dans des conditions optimales de rendement et de fiabilité, et la présente invention vise à combler cette lacune en fournissant un dispositif apte à scinder une nappe de produits en une pluralité de files parallèles dans chacune desquelles les produits sont ordonnés les uns derrière les autres.

A cet effet, l'invention vise un dispositif d'alignement de produits tels que des fruits se déplaçant en nappe dans un canal animé d'un courant d'eau, en vue de l'alimentation d'un convoyeur à n lignes de transport parallèles, caractérisé en ce qu'il comprend :
- n conduits tubulaires de section adaptée pour permettre le passage d'un produit, juxtaposés longitudinalement et partiellement immergés, chacun desdits conduits comportant une extrémité amont d'entrée des produits et une extrémité aval de sortie des produits, et étant agencé dans le canal de façon que son extrémité aval se trouve dans l'alignement d'une ligne de transport,
- des moyens d'entraînement en rotation des conduits aptes à les faire tourner sur eux-mêmes autour de leur axe longitudinal.

Ce dispositif permet de séparer les fruits selon un nombre variable de files dépendant uniquement du nombre de conduits, les fruits de chaque file étant alignés les uns derrière les autres dans les conduits, notamment grâce au mouvement de rotation desdits conduits qui évite l apparition d'un effet de voûte à l'embouchure de ces derniers.

Du fait de cet alignement ordonné des fruits, le débit est proportionnel à la vitesse du convoyeur car les fruits s'organisent en file d'attente en s appuyant les uns contre les autres jusqu'au fruit de tête qui est emporté par ledit convoyeur.

De ce fait, les fruits sont délivrés vers le convoyeur avec la régularité nécessaire à un rendement optimal de ce dernier, et ce quelle que soit la vitesse dudit convoyeur.

Selon une autre caractéristique de l'invention chaque conduit comporte une face interne dotée de nervures longitudinales hélicoïdales aptes à former à l'intérieur desdits conduits l'équivalent d'une hélice d'Archimède.

Ces nervures ont pour rôle d'augmenter la vitesse de l'eau à l'intérieur des conduits permettant ainsi d'ajuster cette vitesse à la vitesse de défilement du convoyeur.

Selon une autre variante de réalisation visant également à augmenter la vitesse de l'eau à l'intérieur des conduits, chacun desdits conduits présente une forme tronconique de section décroissante selon le sens d'avancement des produits.

En outre, selon cette variante, les conduits présentent avantageusement un tronçon d'extrémité, dit aval, de forme circulaire agencée pour coopérer avec un organe souple de transmission apte à entraîner en rotation ledit conduit.

Selon une autre caractéristique de l'invention, les moyens d'entraînement en rotation des conduits sont adaptés pour faire tourner lesdits conduits à une vitesse de rotation sensiblement comprise entre 10 t/mn et 60 t/mn.

D'autres caractéristiques, buts et avantages de l'invention ressortiront de la description détaillée qui suit, en référence aux dessins annexés qui en représentent, à titre d'exemples non limitatifs, deux modes de réalisation préférentiels. Sur ces dessins, qui font partie intégrante de la présente description :
- la figure 1 est une vue en plan d'un dispositif conforme à l'invention,
- la figure 2 en est une coupe longitudinale par un plan vertical A,
- et la figure 3 est une coupe transversale par un plan vertical B d'un conduit de ce dispositif,
- la figure 4 est une vue en plan d'une variante de dispositif conforme à l'invention,
- la figure 5 est une coupe longitudinale par un plan vertical C de cette variante,
- et la figure 6 est une vue frontale des moyens d'entraînement en rotation de deux conduits juxtaposés conformes à cette variante.

Le dispositif d'alignement de fruits, conforme à l'invention, est destiné à être disposé dans un canal animé d'un courant d'eau, en amont d'un convoyeur s'étendant, au niveau de sa zone de chargement, selon une rampe inclinée, et comportant n lignes de transport parallèles dotées chacune d'une pluralité de rouleaux espacés, entre lesquels viennent se loger les fruits.

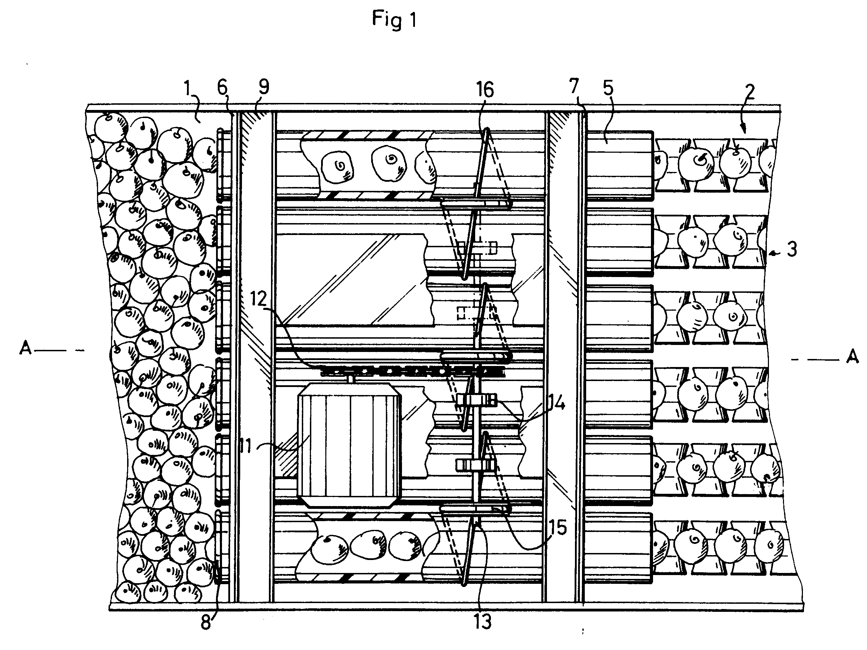

Selon le premier mode de réalisation représenté aux figures 1 à 3, le canal 1 présente une largeur conjuguée de celle du convoyeur 2 qui comporte, en l'exemple, six lignes de transport parallèles 3.

Le dispositif comprend, quant à lui, une pluralité de tubes cylindriques horizontaux, tels que 5, juxtaposés et parallèles, s'étendant entre deux flasques verticaux 6, 7, dotés d'orifices conjugués de la section desdits tubes.

Ces tubes 5 sont disposés dans le canal 1, de façon à se trouver, chacun dans l'alignement d'une ligne de transport 3 du convoyeur 2. De plus, ils sont disposés dans le canal 1 à une hauteur adaptée pour qu'il soient semi-immergés.

Ces tubes 5 sont, en outre, pourvus vers leur extrémité amont, opposée au convoyeur 2, d'un bourrelet 8 en un matériau apte à absorber les chocs.

Chacun des tubes 5 comprend, par ailleurs, trois nervures internes hélicoïdales telles que 17, réparties autour de l'axe desdits tubes, et constituées de bourrelets de section semi-arrondie réalisés en caoutchouc mousse.

De telles nervures 17 dont le pas est compris sensiblement entre 200 mm et 1 m, ont pour fonction de former l'équivalent d'une hélice d'Archimède permettant d'adapter la vitesse de l'eau a l'intérieur des tubes 5 à la vitesse de défilement du convoyeur 2.

Le dispositif comprend, en outre, des moyens d'entraînement en rotation des tubes 5, portés par une plate forme constituée de longerons tels que 9 et de traverses telles que 10 disposés entre les flasques 6, 7.

Ces moyens d'entraînement comprennent, un motoréducteur 11 entraînant par l'intermédiaire d'une chaîne 12, un arbre de distribution 13 disposé transversalement au-dessus des tubes 5, et monté rotatif dans des paliers 14 fixés sur les traverses 10.

Il comprennent, en outre, n/2 poulies 15 montées sur l'arbre de distribution 13 et réparties le long de ce dernier et, associée à chacune de ces poulies 15, une courroie 16 s'étendant selon une boucle en forme de huit autour de deux tubes 5 juxtaposés de façon à entraîner par friction lesdits tubes en rotation autour de leur axe longitudinal.

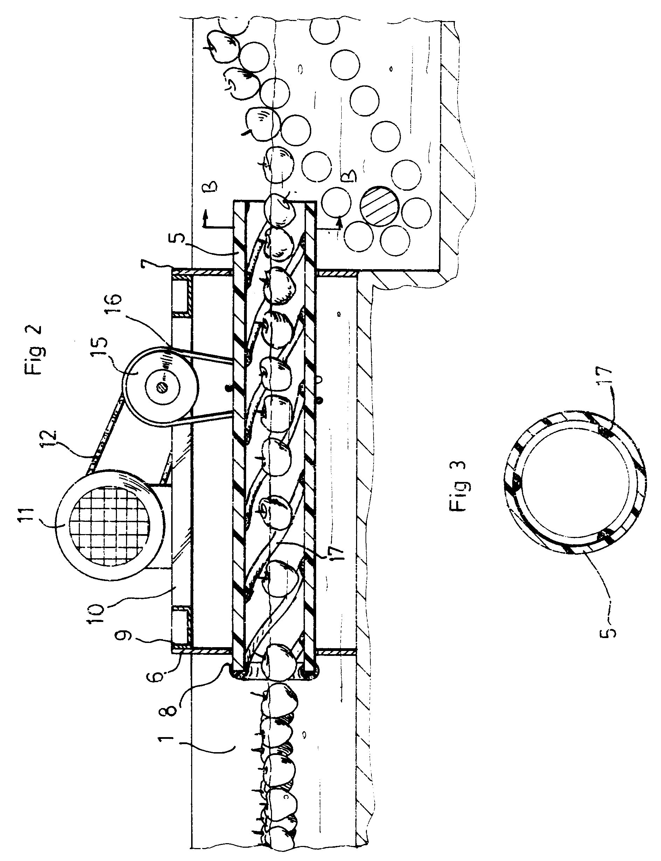

Tel que représenté aux figures 1 et 2, lorsqu'un tel dispositif est disposé dans un canal 1 animé d un courant d eau, en amont d'un convoyeur 2, une nappe de fruits en flottaison s'établit en amont des tubes 5.

Grâce notamment au mouvement de rotation de ces tubes 5, ces fruits viennent s'aligner dans lesdits tubes, formant un flux de fruits alignés avec une régularité permettant un remplissage optimal du convoyeur 2.

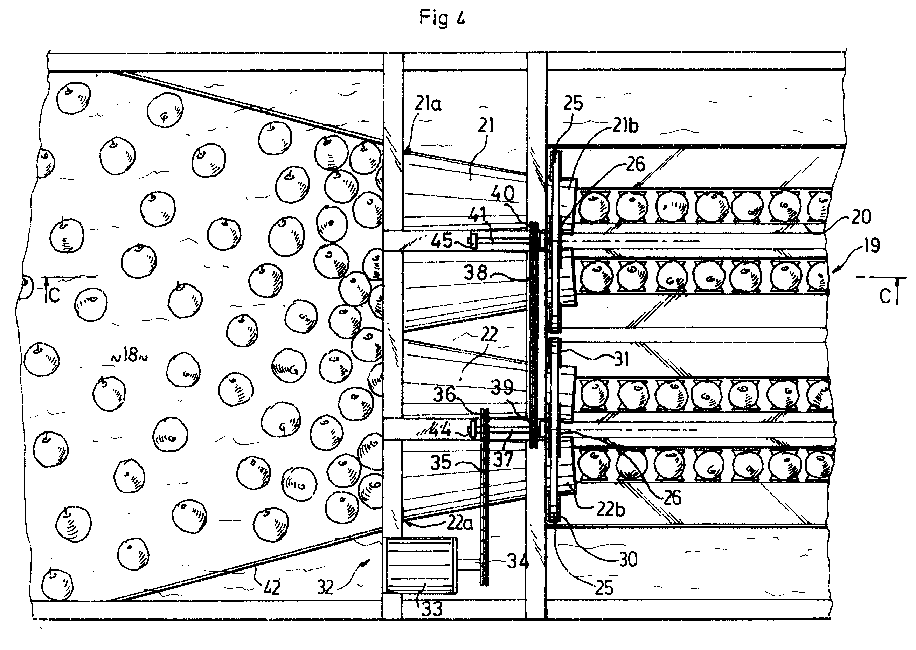

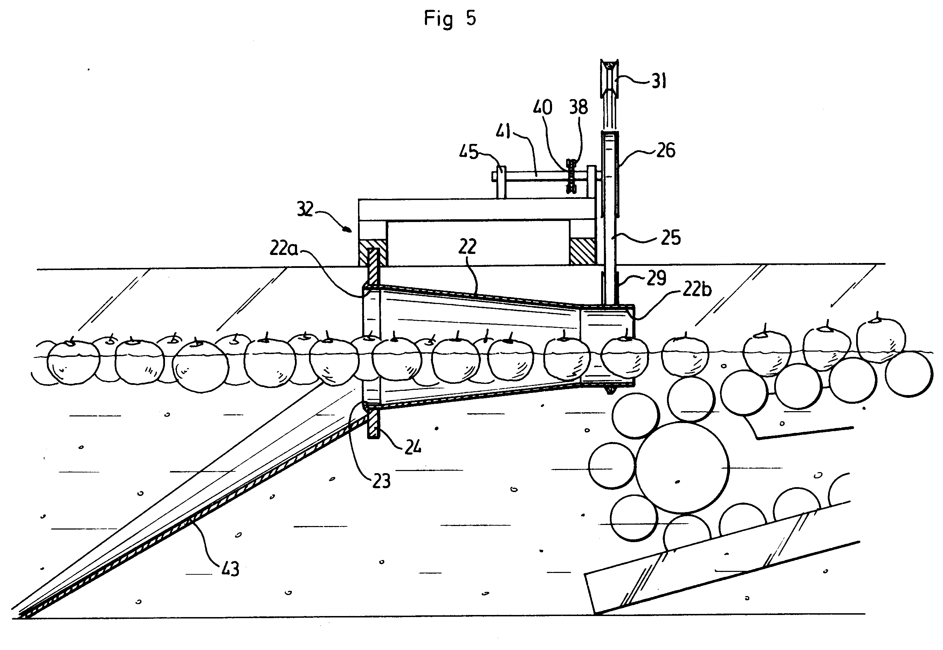

Selon le deuxième mode de réalisation représenté aux figures 4 à 6, le canal 18 présente une largeur supérieure a celle du convoyeur 19 qui comporte, en l'exemple, quatre lignes de transport parallèles 20.

Le dispositif comprend, quant à lui, quatre tubes tronconiques horizontaux tels que 21, 22 comportant des tronçons d'extrémité amont 21a, 22a et aval 21b, 22b circulaires, les tronçons amont 21a, 22a présentant, en outre, une collerette, telle que 23, d'extrémité.

Ces tubes 21, 22 sont disposés dans le canal 18 de façon à être semi-immergés et à présenter une section décroissant selon le sens d'écoulement de l'eau. De plus, ils sont inclinés relativement à l'axe longitudinal du canal 18 de façon que leurs extrémités amont 21a, 22a soient sensiblement accolées, et leurs extrémités aval 21b, 22b positionnées chacune dans l'alignement d'une ligne de transport 20.

Au niveau de leur extrémité amont ces tubes 21, 22 sont portés par un flasque vertical 24 doté d'orifices conjugués de la section du tronçon d'extrémité amont 21a, 22a desdits tubes, adaptés pour que la collerette 23 vienne buter contre ledit flasque. En outre, ce flasque 24 présente une hauteur inférieure à la profondeur du canal 18.

Au niveau de leur extrémité aval, ces tubes 21, 22 reposent dans une boucle d'une courroie 25 d'entraînement en rotation desdits tubes.

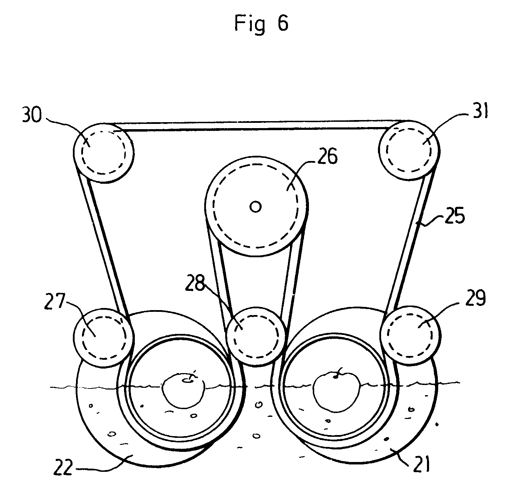

Tel que représenté à la figure 6, chaque courroie d'entraînement 25 porte le tronçon d'extrémité aval 21b, 22b de deux tubes 21, 22, le nombre de courroies 25 nécessaire pour n tubes étant donc n/2.

Chaque courroie 25 est entraînée par une poulie motrice 26, disposée au-dessus des deux tubes 21, 22 concernés, l'axe de rotation de ladite poulie s'étendant horizontalement à équidistance de l'axe longitudinal desdits tubes.

Le trajet de cette courroie 25 est défini, en premier lieu, par trois poulies 27, 28, 29 d'enroulement autour des tubes 21, 22 et de maintien en contact, disposées respectivement entre lesdits tubes 21, 22, et de part et d'autre de ces derniers, de façon à permettre leur entraînement en rotation par friction.

Ce trajet est enfin défini par deux poulies tendeurs de retour 30, 31 disposées au-dessus de la poulie motrice 26, symétriquement de part et d'autre de celle-ci.

Les moyens d'entraînement en rotation des poulies motrices 26 sont portés par une plateforme horizontale 32. Ils comprennent un motoréducteur 33 dont l'arbre moteur porte un pignon 34 relié par une première chaîne 35 à un pignon 36 solidaire de l'arbre de rotation 37 de la poulie motrice 26 la plus proche dudit motoréducteur, ledit arbre de rotation étant monté rotatif dans des paliers fixes tels que 44.

Ces moyens d'entraînement en rotation comprennent, en outre, une chaîne 38 reliant un deuxième pignon 39 solidaire de l'arbre de rotation 37 de la poulie motrice 26 précitée, et un deuxième pignon 40 porté par l'arbre de rotation 41 de l'autre poulie motrice, ledit arbre étant lui même étant monté rotatif dans deux paliers fixes tels que 45.

En dernier lieu, le canal est équipé de déflecteurs latéraux 42 et inférieur 43 adaptés pour canaliser le débit d'eau vers les tubes 21, 22 et ainsi augmenter la vitesse de l'eau à l'intérieur desdits tubes.

Le dispositif ci-dessus décrit permet, de même que le précédent, de réaliser un remplissage optimal du convoyeur 19 situé en aval.

## Revendications

1. Dispositif d'alignement de produits tels que des fruits se déplaçant en nappe dans un canal (1 ; 18) animé d'un courant d'eau, en vue de l'alimentation d un convoyeur (2 ; 19) à n lignes de transport (3 ; 20) parallèles, caractérisé en ce qu'il comprend :
- n conduits tubulaires (5 ; 21, 22) de section adaptée pour permettre le passage d'un produit, juxtaposés longitudinalement et partiellement immergés, chacun desdits conduits comportant une extrémité amont d'entrée des produits et une extrémité aval de sortie des produits, et étant agencé dans le canal (1 ; 18) de façon que son extrémité aval se trouve dans l'alignement d'une ligne de transport (3 ; 20),
- des moyens (11-16 ; 25-31, 33-41) d'entraînement en rotation des conduits (5 ; 21, 22) aptes à les faire tourner sur eux-mêmes autour de leur axe longitudinal.

2. Dispositif selon l'une des revendications 1 ou 2, caractérisé en ce que les conduits (5 ; 21, 22) sont disposés dans le canal de façon à être semi-immergés.

3. Dispositif selon l'une des revendications 1 ou 2, caractérisé en ce que les conduits (5) comportent une extrémité dite amont, opposée au convoyeur (2), bordée d'un bourrelet (8) en un matériau apte à absorber les chocs.

4. Dispositif selon l'une des revendications 1 à 3, caractérisé en ce que chaque conduit (5) est cylindrique.

5. Dispositif selon la revendication 4, caractérisé en ce que chaque conduit (5) comporte une face interne dotée de nervures (17) longitudinales et hélicoïdales aptes à former à l'intérieur desdits conduits l'équivalent d'une hélice d'Archimède.

6. Dispositif selon la revendication 5, caractérisé en ce que chaque conduit (5) comprend trois nervures hélicoïdales (17) réparties autour de l'axe longitudinal dudit conduit.

7. Dispositif selon l'une des revendications 5 ou 6, caractérisé en ce que chaque nervure hélicoïdale (17) présente un pas sensiblement compris entre 200 mm et 1 m.

8. Dispositif selon l'une des revendications précédentes, caractérisé en ce que les moyens d'entraînement en rotation (11-16 ; 25-31, 33-41) des conduits (5 ; 21, 22) sont adaptés pour faire tourner lesdits conduits à une vitesse de rotation sensiblement comprise entre 10 t/mn et 60 t/mn.

9. Dispositif selon l'une des revendications précédentes, caractérisé en ce que les conduits (5) s'étendent entre deux flasques verticaux (6, 7) dotés d'orifices conjugués de la section desdits conduits.

10. Dispositif selon l'une des revendications précédentes, caractérisé en ce que les moyens d'entraînement en rotation comprennent un motoréducteur (11), un arbre de distribution (13) agencé transversalement au-dessus des conduits (5), et au moins une courroie (16) agencée pour ceinturer lesdits conduits.

11. Dispositif selon l'une des revendications 1 à 3 caractérisé en ce que chaque conduit (21, 22) présente une forme tronconique de section décroissant selon le sens d avancement des produits.

12. Dispositif selon la revendication 11 caractérisé en ce que chaque conduit (21, 22) présente un tronçon d'extrémité (21b, 22b), dit aval, de forme circulaire agencée pour coopérer avec un organe souple de transmission (25) apte d'entraîner en rotation ledit conduit.

13. Dispositif selon la revendication 12 caractérisé en les conduits (21, 22) présentent des extrémités dites amont (21a, 21b) portées par un flasque vertical (24), et des extrémités aval reposant dans une boucle de l'organe de transmission (25).

14. Dispositif selon l'une des revendications 11 à 13 dans lequel le canal (18) présente une largeur supérieure à celle du convoyeur (19), ledit dispositif étant caractérisé en ce qu'il comprend des déflecteurs (42, 43) adaptés pour canaliser l'eau vers les tubes (21, 22).

## Claims

1. Aligning device for products like fruits moving in a layer through a channel (1; 18) by means of a water current, in order to feed a conveyor (2; 19) having n parallel transport lines (3; 20), characterized in that it comprises:
- n tubular conduits (5; 21, 22) having a cross-section adapted to allow the passage of one product, said conduits being longitudinally juxtaposed and partially immersed, wherein each one of said conduits comprises an upstream inlet end for the products and a downstream outlet end for the products, and each conduit is arranged in the channel (1; 18) in such a manner that the downstream end thereof is in alignment with one transport line (3; 20);
- means (11-16; 25-31, 33-41) for rotatively driving said conduits (5; 21, 22), able to rotate them around their longitudinal axis.

2. Apparatus according to claim 1, characterized in that the conduits (5; 21, 22) are positioned in the channel so as to be half-immersed.

3. Apparatus according to one of claims 1 or 2, characterized in that the conduits (5) comprise one so-called uptsream end, opposed to the conveyor (2), which is lined with a rim (8) of a shock absorbing material.

4. Apparatus acording to one of claims 1 to 3, characterized in that each conduit (5) is cylindrical.

5. Apparatus acording to claim 4, characterized in that each conduit (5) comprises an internal surface provided with longitudinal and helical ribs (17) able to form the equivalent of a worm screw within said conduits.

6. Apparatus according to claim 5, characterized in that each conduit (5) comprises three helical ribs (17) distributed around the longitudinal axis of said conduit.

7. Apparatus according to one of claims 5 or 6, characterized in that each helical rib (17) has a pitch substantially in the range between 200 mm and 1 m.

8. Apparatus according to one of the preceding claims, characterized in that the means (11-16; 25-31, 33-41) for rotatively driving the conduits (5; 21, 22) are adapted to rotate said conduits at a rotational speed substantially in the range between 10 rpm and 60 rpm.

9. Apparatus according to one of the preceding claims, characterized in that the conduits (5) extend between two vertical flanges (6, 7) provided with openings conjugated to the cross-section of said conduits.

10. Apparatus according to one of the preceding claims, characterized in that the rotatively driving means comprise a gear-motor (11), a distribution shaft (13) arranged transversally above the conduits (5) and at least one belt (16) arranged to wrap said conduits.

11. Apparatus according to one of claims 1 to 3, characterized in that each conduit (21, 22) has a frustoconical shape tapering in the feeding direction of the products.

12. Apparatus according to claim 11, characterized in that each conduit (21, 22) has a so-called downstream terminal section (21b, 22b) with a circular shape arranged to cooperate with a flexible transmission member (25) able to rotatively drive said conduit.

13. Apparatus according to claim 12, characterized in that the conduits (21, 22) have so-called upstream ends (21a, 21b) supported by a vertical flange (24), and downstream ends supported in a loop of the transmission member (25).

14. Apparatus according to one of claims 11 to 13, wherein the channel (18) has a width greater than said conveyor (19), said apparatus being characterized in that it comprises baffles (42, 43) adapted to direct the water towards the tubes (21, 22).

## Patentansprüche

1. Vorrichtung zum Ausrichten von Produkten, wie Früchten, die sich schichtweise mittels Wasserströmung durch einen Kanal (1; 18) bewegen, zur Beschickung eines Förderers (2; 19) mit n parallelen Transportwegen (3; 20) zu bestücken, dadurch gekennzeichnet, daß die Vorrichtung
- n röhrenförmige Röhren (5; 21, 22) mit angepaßtem Querschnitt, um den Durchlaß eines Produktes zu erlauben, wobei die Röhren längs gelagert und teilweise eingetaucht sind, wobei jede einzelne Röhre einen stromaufwärts liegenden Produkteeinlaß und einen stromabwärts liegenden Produktauslaß aufweist und wobei jede Röhre im Kanal (1; 18) so angebracht ist, daß das stromabwärtige Ende in einer Linie mit einer Transportspur (3; 20) liegt; und
- Mittel (11-16; 25-31, 33-41) zum rotierenden Antrieb der Röhren (5; 21, 22), die es ermöglichen, sie um ihre Längsachse zu drehen,
umfaßt.

2. Vorrichtung gemäß Patentanspruch 1, dadurch gekennzeichnet, daß die Röhren (5; 21, 22) im Kanal halbeingetaucht positioniert sind.

3. Vorrichtung gemäß der Patentansprüche 1 oder 2, dadurch gekennzeichnet, daß die Röhren (5) gegenüber dem Förderer (2) ein sogenanntes stromaufwärtiges Ende aufweisen, welches mit einem Kranz (8) aus stoßabsorbierendem Material umkleidet ist.

4. Vorrichtung gemäß einem der Patentansprüche 1 bis 3, dadurch gekennzeichnet, daß jede Röhre (5) zylindrisch ist.

5. Vorrichtung gemäß Patentanspruch 4, dadurch gekennzeichnet, daß jede Röhre (5) eine innere Oberfläche umfaßt, die mit längs- und spiralenförmigen Rippen (17) ausgestattet ist, die ein Äquivalent einer Wurmschraube innerhalb der Röhren bilden.

6. Vorrichtung gemäß Patentanspruch 5, dadurch gekennzeichnet, daß jede Röhre (5) drei um die Längsachse der Röhre verteilte, spiralenförmige Rippen (17) umfaßt.

7. Vorrichtung gemäß einem der Patentansprüche 5 oder 6, dadurch gekennzeichnet, daß jede spiralenförmige Rippe (17) eine Steigung von im wesentlichen im Bereich zwischen 200 mm und 1 m hat.

8. Vorrichtung gemäß einem der vorangehenden Patentansprüche, dadurch gekennzeichnet, daß die Mittel (11-16; 25-31, 33-41) zur rotierenden Bewegung der Röhren (5; 21, 22) so angepaßt sind, daß sie die Röhren mit einer Rotationsgeschwindigkeit von im wesentlichen im Bereich zwischen 10 upm und 60 upm drehen können.

9. Vorrichtung gemäß einem der vorangehenden Patentansprüche, dadurch gekennzeichnet, daß die Röhren (5) sich zwischen zwei vertikalen Flanschen (6, 7) erstrecken, die mit Öffnungen versehen sind, die mit dem Querschnitt der Röhren verbunden sind.

10. Vorrichtung gemäß einem der vorangehenden Patentansprüche, dadurch gekennzeichnet, daß die Rotationsantriebsmittel einen Getriebemotor (11), eine transversal über den Röhren (5) angebrachte Verteilerwelle (13) und außerdem einen um die Röhren gelegten Riemen (16) umfassen.

11. Vorrichtung gemäß eines der Patentansprüche 1 bis 3, dadurch gekennzeichnet, daß jede Röhre (21, 22) kegelstumpfartig, sich in der Vorschubsrichtung der Produkte verjüngend ausgebildet ist.

12. Vorrichtung gemäß Patentanspruch 11, dadurch gekennzeichnet, daß jede Röhre (21, 22) ein sogenanntes stromabwärts gelegenes, rund geformtes Endstück (21b, 22b) aufweist, das so mit einem flexiblen Übertragungsteil (25) zusammenarbeit, daß es den rotierenden Antrieb der Röhren ermöglicht.

13. Vorrichtung gemäß Patentanspruch 12, dadurch gekennzeichnet, daß die Röhren (21, 22) sogenannte stromaufwärtige, von einer vertikalen Flansch (24) unterstützte Enden (21a, 21b) und stromabwärtige, von einer Schlaufe des Transmissionsteils (25) gehalte Enden aufweisen.

14. Vorrichtung gemäß eines der Patentansprüche 11 bis 13, wobei der Kanal (18) eine größere Ausdehnung als der Förderer (19) hat, und die Vorrichtung dadurch gekennzeichnet ist, daß er Ablenkplatten (42, 43) umfaßt, die angepaßt sind, um das Wasser gegen die Röhren (21, 22) zu leiten.
